# EUROPEAN PATENT SPECIFICATION

(11) **EP 1 892 149 B1**
(45) Date of publication and mention of the grant of the patent: **04.02.2009**
(21) Application number: 06017669.0
(22) Date of filing: 24.08.2006
(51) Int. Cl.: B60R 1/00, B60K 31/00, H04N 7/18

(54) **Method for imaging the surrounding of a vehicle and system therefor**
Verfahren zum Abbilden der Umgebung eines Fahrzeugs und System dafür
Procédé pour la capture d'image dans l'entourage d'un véhicule et système correspondant

(43) Date of publication of application: 27.02.2008
(73) Proprietor: Harman Becker Automotive Systems GmbH, 76307 Karlsbad (DE)
(72) Inventor: Stiegler, Andreas, 76337 Waldbronn (DE)
(74) Representative: Bertsch, Florian Oliver

(56) References cited:
- EP-A- 1 533 653
- DE-A1-7102005 025 38
- US-A1- 2005 012 817

## Description

This invention relates to a method for imaging the surrounding for a vehicle. The invention also relates to a cruise control system in which a control unit controls driving parameters of the vehicle.

### Related Art

The use of image sensors such as cameras is proliferating in vehicles. By way of example, cameras are used in park control systems where the image sensor images the back of the vehicle in order to detect obstacles and in order to show the surrounding of the vehicle in the back to the driver. Additionally, cruise control systems have been developed in which the front of the vehicle is investigated in order to look for objects such as other vehicles. In these cruise control systems the relative distance between the object moving in front of the vehicle and the vehicle has to be determined. When it is determined that an object is getting too close to the vehicle, the driver may be informed or the cruise control system may even actively control the motor by decelerating etc. Conventional image sensors such as CCD or CMOS image sensors measure the intensity of the scene, but it lacks a depth information of the scene. Conventionally, a 3D information could be obtained by using two 2D image sensors such as CCD cameras and by using mathematics.

Additionally, 3D image sensors have been developed, these sensors overcoming drawbacks faced by commercially available 2D sensors. Such 3 dimensional optical measurements deliver the absolute 3D geometry of objects that are largely independent of the objects' surface reflectivity, the distance of the objects from the sensor and the illumination conditions. One example of a 3 dimensional camera is a PMD (photonic mixer device) sensor, the PMD sensor measuring the distance by emitting a light signal and by calculating the time of light of the reflected light signal. These 3D image sensors are semiconductor elements. A 3 dimensional image can be obtained by positioning several 3D sensor elements in a matrix allowing the measurement of different pixels and therefore the measurement of a complete image.

When the signal of an image sensor is to be used in systems assisting the driver by detecting objects approaching the vehicle or by tracking the vehicle in front of the image sensor, the image data have to be updated at a high rate. When the image signal should be used on highways with high velocity, frame rates (images per time) such as 100 frames/s are necessary. When a complete 2 dimensional image is calculated 100 times a second, high computing power is needed to process the images and to detect the relevant information in the images.

The document DE 10 2005 025 387 A discloses the preamble of claim 21.

### Summary

Accordingly, a need exists to provide a method according to claim 1 for imaging the surrounding of a vehicle and a system according to claim 21 therefor in which the computing power can be reduced and in which nevertheless the object detection is assured.

This need is met by the features of the independent claims. In the dependent claims preferred embodiments of the invention are described.

According to one aspect of the invention, a method according to claim 1 for imaging the surrounding of a vehicle is provided, the method comprising the step of taking a serie of 2 dimensional images of the surrounding. Additionally, a serie of 3 dimensional images of the surrounding are taken, the 3 dimensional images comprising a depth information. Furthermore, an object in an area of interest is determined in one of the series of images and said object in said area of interest is tracked. Additionally, the other of the series of images is also processed in order to retrieve object information from said other series of images. The objects to be tracked in said one series of images are then adjusted in accordance with the object information received from processing the other series of images. By processing only areas of interest in one of the series, the computing power can be reduced. Due to the fact that not the complete image is processed, the processing can be focused on some areas of interest in the image. As the rest of the image is not processed, objects in the non-processed parts of the images cannot be detected. In order to reliably detect new objects in the images approaching the vehicle, the other series of images is processed. If an object is detected in the other series of images, the information is transmitted to the imaging unit where the series of images is taken in which the objects are tracked in areas of interest. The object detected by processing the other series of images can then be tracked in the one series of images. Through the fusion of a standard 2D camera with a distance measurement sensor the complexity of the imaging system can be reduced. Additionally, the quality of the object detection and the latency of the result can be optimized.

The 2 dimensional and the 3 dimensional series of images are processed in order to localize objects in a predetermined observation area of the images, the distances of which vary relative to the vehicle. One important aspect of imaging systems imaging the surrounding of a vehicle is the detection of objects which approach the vehicle, be it another vehicle or be it a person crossing the street or be it any other object. If an object is detected in the series of images, the position of the object in the image and the velocity of the object relative to the vehicle is determined. These data can then be used in order to determine whether it is necessary to react. In case of a pre-crash control it has to be determined whether the velocity and the position of the detected object are such that the object will hit the vehicle or not. In a cruise control system it has to be determined whether it is necessary to activate the break or to lower the acceleration or the speed in order to avoid a contact with the detected object or in order to keep the distance to the front vehicle.

When two different image sensors are provided, the following basic scenarios are possible. In a first scenario areas of interest are determined in the series of 2 dimensional images in which the movement of the object is tracked. In this case the 2 dimensional images are processed by taking into account and processing only parts of the image, the parts where the detected objects are present. For computing reasons it is possible even not to read out the data for the other parts of the images. When the 2 dimensional images are used for tracking the different objects, the distance of the objects relative to the vehicle can be determined using the 3 dimensional images. The 3 dimensional imaging sensors normally determine the distance for all the pixels of the image sensor. Accordingly, the 3 dimensional imaging unit can control the complete field of view for objects approaching the vehicle. In this case the 3 dimensional images are processed in order to detect objects for which the distance change relative to the vehicle is larger than a predetermined value. When the 2 dimensional images and the 3 dimensional images cover the same field of view, the processing of the 2 dimensional images can be concentrated on certain areas of interest in which objects were already localized. There is no need to process the other parts of the images. When the 3 dimensional imaging unit taking the series of 3 dimensional images detects an object which has to be tracked, the position and size information of the detected object retrieved from the 3 dimensional images can be transmitted to the 2 dimensional imaging unit, the objects tracked in the 2 dimensional images being adapted to the information received from the 3 dimensional images. The 2 imaging systems together allow the supervision of the surrounding of the vehicle, even if not the complete image of one of the series of images is processed. Taking into account that the number of pixels in a 2 dimensional imaging sensor can be around 600 x 800 and taking into account the about 100 images/s need to be processed, it becomes clear that the concentration on different areas of interest is necessary in view of computing power to process the complete image all the time. The 3 dimensional imaging sensors normally have a much lower pixel resolution. By way of example, they may use a resolution of 48 x 64 pixels. This resolution is enough to detect new objects approaching the vehicle. The information is then transmitted to the 2 dimensional imaging unit where the additional area of interest is tracked, comprising the object detected by the 3 dimensional imaging sensor.

The 2 dimensional images can be taken at a frame rate between 50 and 100 frames/s, whereas the 3 dimensional images can also be taken at a frame rate between 10 and 100 frames/s. It should be understood that any other frame rate for the 2 dimensional and 3 dimensional images is possible.

As discussed above, predetermined areas of interest are processed from the 2 dimensional images, so that not the complete image is used for processing. According to one embodiment of the invention, the 2 dimensional images, i.e. the areas of interest of the 2 dimensional images are recorded at a first frame rate, whereas a second frame rate is used for the acquisition of the complete 2 dimensional image. When the field of view of the complete 2 dimensional image is also observed by the 3 dimensional image sensor, it is possible to use the second frame rate which is 10 to 50 times smaller than the first frame rate. This means that, when 100 images of the tracked areas of interest are taken every second, the complete 2 dimensional image is taken every half a second or every second. The above figures show that the computing power can be vigorously reduced. In said first scenario it is not necessary to take the complete 2 dimensional image every time the areas of interest are imaged. This first scenario described above where the 2 dimensional image only tracks areas of interest and receives the distance information from the 3D sensor can happen by way of example on streets with children playing. In this environment an object may suddenly occur in the field of view of the imaging sensors, the 3D sensor determining the distance of the newly detected object.

According to another basic scenario of the use of the 2 dimensional and 3 dimensional images, objects are identified and tracked in the 3 dimensional images together with the object's position and velocity relative to the vehicle. The 3 dimensional image sensor tracks predetermined objects and determines the relative distance. It should be understood that the 3 dimensional imaging sensor may determine the distance for all pixels of the image, however, it is also possible to concentrate on different objects and to transmit the distance of these objects to a processing unit for further processing. For the 3D image sensor the tracking of objects means that the distance is determined for all pixels, but for some objects their position and their relative velocity is determined and used for further processing. Additionally, predetermined areas of interest may be observed in the 2 dimensional images. When the 2 dimensional images are processed, a distance change can be followed from the fact that the size of an object in an observed area of the 2D images varies. By way of example, when an object tracked in the 2 dimensional images is getting larger very fast, it can be followed that the distance relative to the vehicle gets smaller.

When the processing of the 2 dimensional images results in an object for which the position has to be determined in more detail, the position of the detected object in the 2 dimensional image is transmitted to the 3 dimensional imaging unit and the relative distance of said object to the vehicle is requested and the distance is determined using the 3 dimensional images. Additionally, this newly detected object can then also be tracked using the series of 3 dimensional images. Summarizing, in this second scenario the processing of the 2 dimensional images gives a hint to the other imaging unit for tracking an additional object, whereas in the first scenario described above, the processing of the 3 dimensional images gives a hint for observing an additional area of interest in the 2 dimensional images.

When the imaging is used together with a pre-crash unit or a cruise control unit, an alarm signal may be generated when it is determined in one of the series of images that an object approaches the vehicle at a predetermined relative speed and at a relative distance to the vehicle. The driver of the vehicle may then be informed of the fact that an object is considered as being a possible threat to the vehicle.

For determining the objects which could be a possible danger to the vehicle, the driving direction of the vehicle may be considered. This helps to avoid the situation that approaching traffic signs next to the road are considered as a possible hazard to the vehicle.

The two scenarios mentioned above that the processing of one of the images provides additional information to the processing of the other series of images were described as two different scenarios. However, it is also possible that both scenarios are used together. This means that in a preferred embodiment, the image processing is not restricted in such a way that the processing is limited to one of the scenarios mentioned above. It is also possible that a mixture of both scenarios or both imaging techniques are used at the same time, meaning that the 3D imaging sensor provides a distance information to the processing of the 2D images so that a new area of interest is observed and the 2 dimensional images or the processing of the 2 dimensional images gives a hint to the 3D image processing that another area object should be tracked with the 3D images. Depending on the traffic situation and depending on which road the vehicle drives, both processing methods described above may be used in combination.

The invention furthermore relates to a system imaging the vehicle surrounding comprising the 2 dimensional image sensor generating the series of 2 dimensional images and comprising the 3 dimensional image sensor generating the 3 dimensional images of the vehicle surrounding. An image processing unit may be provided processing one of the 2D and 3D images for detecting objects in the images to be tracked. Additionally, the image processing unit also processes the other of the 2D and 3D images in order to retrieve object information in the other images. The processing unit can then adjust the objects to be tracked in said one of the 2D and 3D images in accordance with the object information received from processing the other images. The 2D image sensor can be a standard CMOS or a CCD image sensor, the 3D image sensor can be a PMD image sensor. However, any other 2 dimensional image sensor or 3D image sensor providing a pixel-based depth information can be used. Additionally, a 3D imaging unit can be provided comprising the 3D image sensor and comprising a 3D sensor control unit, the sensor control unit determining which of the areas in the image are processed or tracked. Furthermore, a 2D imaging unit can be provided comprising the 2D image sensor and a 2D sensor control unit, the sensor control unit controlling which parts of the 2D images are processed.

Other objects, features and advantages of the invention will become apparent in the course of the following description referring to the accompanying drawings.

### Drawings

Fig.1 shows a schematic view of an imaging unit comprised in a vehicle using two different imaging sensors,
Figs. 2a-2c show different steps in the image processing for the scenario in which the processing of the 3D images provides an information to the 2D image processing which part of the 2D images should be processed, and
Fig. 3a-3c show examples of images processed in a scenario where the processing of the 2D images provides object information to the 3D image processing.

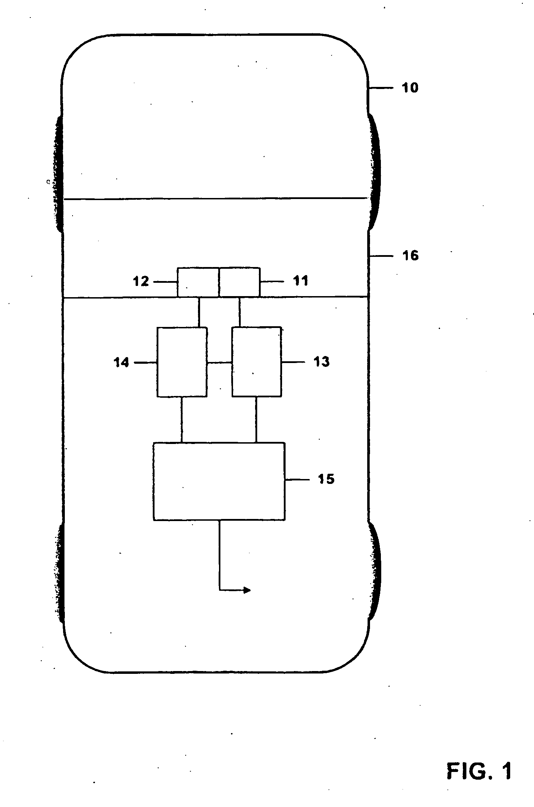

In Fig. 1 a vehicle with a system imaging the vehicle's environment is schematically shown. The vehicle 10 comprises a 2D image sensor 11 and a 3D image sensor 12. The 2D image sensor is connected to a 2D sensor control unit 13, the 3D image sensor being connected to a 3D sensor control unit 14. Both control units 13 and 14 are connected to a central processing unit 15 processing the 2D and the 3D images. It should be understood that the different control units 13 and 14 and the processing unit 15 can be incorporated into one single unit. Furthermore, it is possible that different processing units are provided for each image sensor. In the example shown the two imaging sensors are positioned behind the windscreen 16. However, it is also possible to install the two sensors behind the radiator grill. Furthermore, the imaging sensors may be provided in the position shown in Fig. 1 as well as in the front part of the vehicle. The 2D image sensor can be a CCD or CMOS camera, image data being generated at frame rates of up to 100 frames/s. This high frame rate is necessary in order to reliably detect new objects when the vehicle is driving at high speed. As 2D image sensor, any image sensor can be used which provides two-dimensional image data at frame rates of about 50-100 frames/s. The 3D image sensor can be a PMD image sensor. In PMD sensors a light is emitted and the light reflected from the object is detected by the sensor. According to one embodiment of the invention, the two different image sensors are installed close to each other in order to ensure that the same field of view is covered by both image sensors. However, it is also possible to position one image sensor at one location in the vehicle and to position the other image sensor at another location of the vehicle. By way of example, one image sensor may be provided behind the windscreen, the other sensor being provided in the front part of the vehicle at the radiator grill. However, this invention is not restricted to the two positions of the image sensors described above. It is possible to locate the image sensor anywhere in the vehicle at a position from which the field of view in front of the vehicle can be observed.

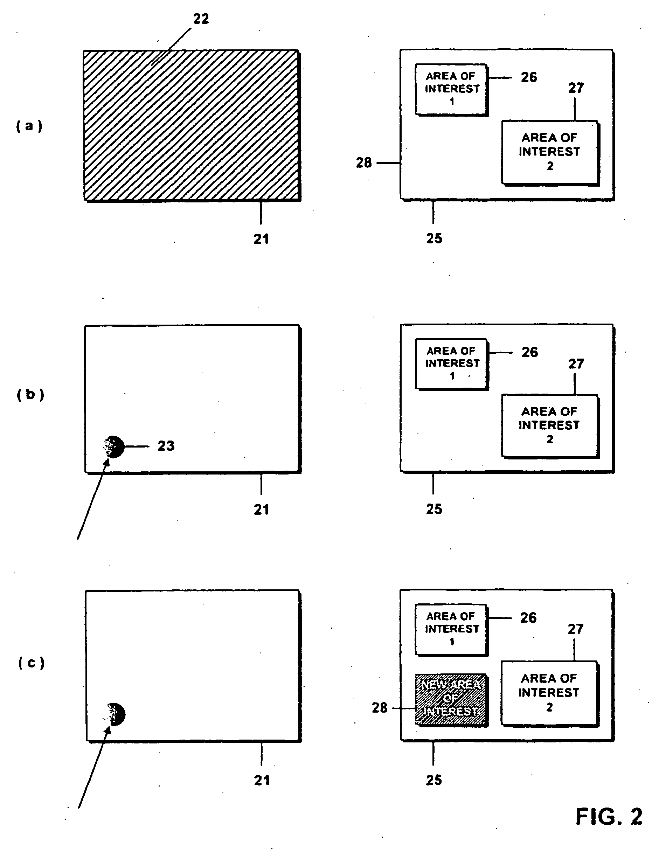

In Figure 2 one possible example of an imaging method is shown in more detail. In Figs. 2a-2c exemplary embodiments of images taken by the 2D sensor and the 3D sensor are shown. In Fig. 2 the images 21 show the image taken by the 3 dimensional imaging sensor such as the PMD sensor. The dashed area 22 shown in Fig. 2A indicates that the 3D sensor observes the whole field of view and that the complete image is processed in order to detect possible objects. The images 25 show the images taken by the 2 dimensional image sensor such as the CCD or CMOS camera. In the embodiment shown in Fig. 2a two different areas of interest 26 and 27 are observed. This means that in the images 25 only the data of the areas of interest 26 and 27 are processed. The other parts of the image 28 are not read out and further processed. The observation of the areas of interest greatly reduces the processing of the images. In one example a 2D image is taken every 100^{th} of a second. Most of the time only the signals of the areas of interest are processed in order to track an object (not shown) comprised in said area of the image.

The object in the images can be detected by using different filter algorithms applied to the image data. By way of example, an edge detector filter can be used for detecting objects in the image, or in case of a color image a color filter might be used. In the art many different filter algorithms are known for object detection. Normally, some of these filters are applied to the image, the different filters help to detect the different objects shown in the image. When the areas of interest are renewed at a first frame rate such as 100 frames/s, the complete image 25 may be taken at a frame rate which is about 20 to 50 times lower than the first frame rate. This means that from time to time the complete image is taken and processed in order to process the whole image to look for new objects. If the areas of interest were detected at the first frame rate and the whole image were taken at a second frame rate and no other image processing unit were present, the system could not detect new objects fast enough for a vehicle application. In the present invention, however, the other image sensor, in the case shown in Fig. 2, the 3D image sensor is provided detecting the same field of view than the 2D image sensor. Accordingly, it is possible to process the complete 2D image at a much lower frame rate than the processing of the areas of interest in the 2D images.

As shown in Fig. 2b it may happen that the 3D image sensor recognizes a new object 23 indicated by the arrow shown in Fig. 2b. This object 23 can be detected by the fact that the relative distance to the vehicle changes. The 3D sensor control unit can then inform the 2D sensor control unit that another object was detected at a certain distance at a certain position of the image. The 2D sensor control unit can then react in such a way that in the 2D images 25 a new area of interest 28 is generated in order to track the object 23 detected by the 3D sensor as can be seen in Fig. 2c). The processing of the 2D images is then adapted in such a way that in addition to the areas of interest 26 and 27 a new area of interest 28 is observed and the object in said area is tracked. As can be seen from Figs. 2a-2c such an imaging system can reliable detect new objects in a field of view even when for processing and computer power reasons not the complete image is observed and processed in one of the images. Normally, the resolution of the 2D image sensor is much higher meaning a much larger number of pixels. The embodiment shown in Fig. 2a-2c allows an image processing of restricted areas of interest resulting in a highly reduced computing power. The complete 2 dimensional image 25 can be sampled at a much lower frame rate.

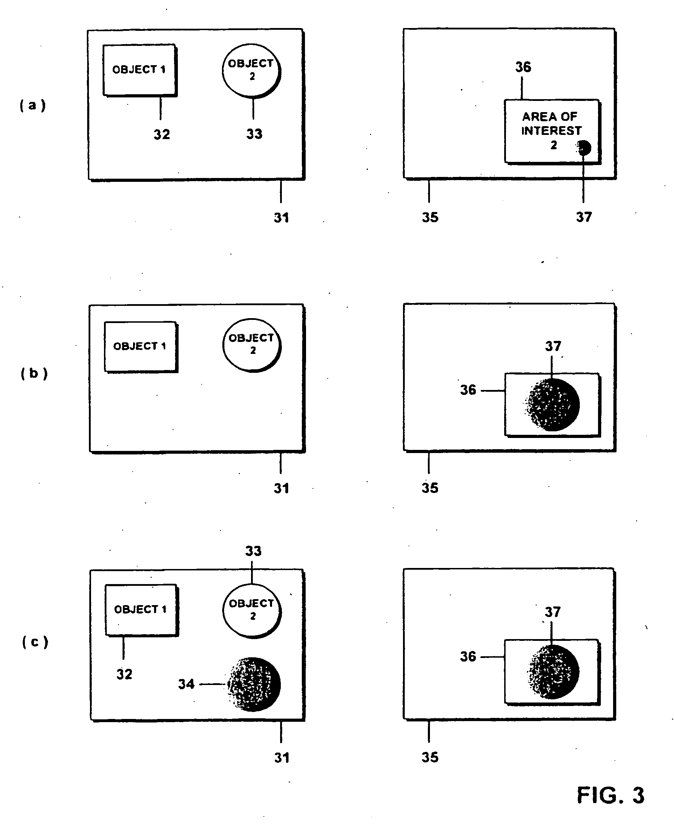

In Fig. 3 another embodiment of the invention is shown in more detail. In the embodiment shown in Fig. 3 the pictures on the left side show again the picture 31 of the 3D image sensor. As shown in Fig. 3a two different objects, the first object 32 and the second object 33, are observed in the 3D images. This observation means that distance values and position and velocity vectors are not only detected for said area of the objects shown in the figure, but these values are also transmitted to a control system (not shown) which determines how to react on the received information. The pictures on the right side show again the 2 dimensional images. In the embodiment shown in Fig. 3a an area of interest 36 is observed in more detail in the 2D images. In this area of interest an object 37 was detected. As shown in Fig. 3b this object 37 in area 36 rapidly became larger. This larger size of object 37 can lead to the assumption that the object 37 is rapidly approaching the vehicle. However, it is difficult to determine the exact distance of the object 37 in the 2D images. Accordingly, the position of the object 37 is transmitted to the 3D image sensor, the 3D image sensor outputting the distance of the object relative to the vehicle. The 3D image sensor now uses another object 34 in order to track said object and in order to determine the relative distance and velocity. The 3D sensor can then reliably determine whether a collision of said object 34 with the vehicle will happen in the near future.

In the embodiment shown in Fig. 3 the 3D sensor adds the new object 34 to the other objects 32 and 33.

In the embodiment shown in Fig. 3 the processing of the 2D images provides an additional information to the 3D sensor, the 3D sensor incorporating this new object into its observation list.

In the two figures 2 and 3 the two different scenarios are shown as different examples. However, it is also possible that the two scenarios shown in Fig. 2 and 3 are combined, so that each image sensor provides an information to the other image sensor in case of an object considered dangerous to the vehicle.

The processing unit 15 processes the images and in the case that a crash is forecast, an alarm signal can be transmitted to a control unit indicated by the arrow shown in Fig. 1. The use of the two different image sensors in a combined way has the following advantages. When processing power needs to be saved, the 2 dimensional images can be processed at a lower frame rate. From time to time still the whole image needs to be computed reducing the advantage of defining areas of interest. The other image sensor such as the 3D PMD sensor can then send information about new objects in the current observation area. Accordingly, the frequency in the 2D image sensor to compute a whole image can be greatly reduced.

Vice versa in the case of a suspicious object detected by the 2D image sensor, the system can ask the 3D image sensor for constant reporting of the distance of this object.

As less computing power is needed, the computing power can be used for reliably detecting objects in the images by applying different filters on the image. Once an object is detected, the tracking of said object is easy and straightforward. However, the detection of new objects is a difficult task and needs a lot of computing power.

Due to the fact that computing power can be saved with this invention, more computing power can be used for the object detection. Accordingly, the detection rate can be improved.

## Claims

1. Method for imaging the surrounding of a vehicle, the method comprising the following steps:
- taking a series of 2 dimensional images (21, 31) of the surrounding
- taking a series of 3 dimensional images (25, 35) of the surrounding, the images comprising a depth information,
- determining at least one object in an area of interest in one of the series of images and tracking said object in said area of interest,
- processing the other of the series of images in order to retrieve object information from said other series of images,
- adjusting the objects to be tracked in said one of the series of images in accordance with the object information received from processing the other of the series of images.

2. Method according to claim 1, **characterized in that** the 2 dimensional and the 3 dimensional images are processed to localize objects in a predetermined observation area of the images, the distance of which vary relative the vehicle.

3. Method according to claim 1 or 2, **characterized in that** the position and the velocity relative to the vehicle is determined for the localized objects.

4. Method according to any of the preceding claims, **characterized in that** areas of interest (26, 27) are determined in the series of 2 dimensional images (25) in which the movement of the objects is tracked.

5. Method according to any of the preceding claims, **characterized in that** the distance of the objects relative to the vehicle is determined in the 3 dimensional images (21).

6. Method according to any of the preceding claims, **characterized in that** the 3 dimensional images (21) are processed in order to detect objects (23) for which the distance change relative to the vehicle is larger than a predetermined value.

7. Method according to claim 6, **characterized in that** the position and size information of the detected object (23) retrieved from the 3 dimensional images is transmitted to a 2 dimensional imaging unit, the objects tracked in the 2D images being adapted to the information received from the 3 dimensional images.

8. Method according to claim 6, **characterized in that** an additional area of interest (28) in which the object detected in the 3 dimensional images is added in the 2 dimensional images (25).

9. Method according to any claims 1 to 3, **characterized in that** objects (32, 33) are identified and tracked in the 3 dimensional images (31) together with the object's position and velocity relative to the vehicle.

10. Method according to claim 9, **characterized in that** objects (37) are identified in the 2D images with their position, for which the change in distance relative to the vehicle is considered to be larger than a predetermined distance change.

11. Method according to claim 10, **characterized by** further comprising the steps of:
transmitting the position of said object (37) to a 3 dimensional imaging unit,
- requesting the determination of the relative distance to the vehicle of the object (37) for which the position was transmitted,
- determining the relative distance of said object for which the position was determined in the 2D images, and
- tracking said object also in the 3 dimensional images.

12. Method according to any of the preceding claims, **characterized in that** the 2D images are taken at a frame rate between 50 and 100 frames/ s, whereas the 3 dimensional images are taken at a frame rate between 10 and 100 frames/ s.

13. Method according to any of the preceding claims, **characterized in that** objects in the images are detected by using different filter algorithms applied to the image data.

14. Method according to any of the preceding claims, **characterized in that** in for the 2 dimensional images a first frame rate is used for the image acquisition of the areas of interest with the tracked objects, whereas a second frame rate is used for the image acquisition of the whole 2D images.

15. Method according to claim 14, **characterized in that** the second frame rate is 10 to 50 times smaller than the first frame rate.

16. Method according to any of the preceding claims, **characterized in that**, when an object is tracked, the position vector in the recorded image and a velocity vector considering a series of images are determined for the tracked object.

17. Method according to any of the preceding claims, **characterized in that** an alarm signal is generated when it is determined in one of the series of images that an object approaches the vehicle with a predetermined relative speed.

18. Method according to claim 17, **characterized in that** the alarm signal is transmitted to a cruise control unit of the vehicle.

19. Method according to claim 17 or 18, **characterized in that** the driver is informed of the fact when an object is closer to the vehicle than predetermined distance.

20. Method according to any of the preceding claims, **characterized in that** the series of images is processed taking into account the driving direction of the vehicle.

21. System imaging a vehicle surrounding, comprising:
- a 2 dimensional image sensor (11) generating a series of 2 dimensional images of the vehicle surrounding,
- a 3 dimensional image sensor (12) generating a series of 3 dimensional images of the vehicle surrounding having a depth information, said system being **characterized in that** it further comprises:
- an image processing unit (15) processing one of the series of 2D and 3D images for detecting at least one object to be tracked in an area of interest in the one series of images, the image processing unit (15) also processing the other of the series of 2D and 3D images in order to retrieve object information in the other of the series of 2D and 3D images, wherein the processing unit adjusts the objects to be tracked in said one of the series of 2D and 3D images in accordance with the object information received from processing the other of the series of images.

22. System according to claim 21, **characterized in that** the 2d image sensor (11) is a CMOS or CCD image sensor, the 3d image sensor (12) being a Photonic Mixer Device image sensor.

23. System according to claim 21 or 22, **characterized by** comprising a 2D imaging unit comprising the 2D image sensor (11) and comprising a 2d sensor control unit (13).

24. System according to any of claims 21 to 23, **characterized by** comprising a 3D imaging unit comprising the 3D image sensor (12) and comprising a 3d sensor control unit (14).

25. Cruise control system for a vehicle comprising a cruise control unit controlling the engine of the vehicle and comprising a system as mentioned in any of claims 21 to 24.

## Patentansprüche

1. Verfahren zum Abbilden der Umgebung eines Fahrzeugs, wobei das Verfahren die folgenden Schritte umfasst:
- Aufnehmen einer Serie von zweidimensionalen Bildern (21, 31) der Umgebung,
- Aufnehmen einer Serie von dreidimensionalen Bildern (25, 35) der Umgebung, wobei die Bilder Tiefeninformationen umfassen,
- Bestimmen von mindestens einem Objekt in einem interessanten Gebiet in einer der Serien von Bildern und Verfolgen des Objekts in dem interessanten Gebiet,
- Verarbeiten der anderen Serie von Bildern, um Objektinformationen von der anderen Serie von Bildern zu erlangen,
- Anpassen der Objekte, die in der einen der Serien von Bildern verfolgt werden sollen, gemäß der Objektinformationen, die vom Verarbeiten der anderen der Serien von Bildern erhalten wurden.

2. Verfahren nach Anspruch 1, **dadurch gekennzeichnet, dass** die zweidimensionalen und die dreidimensionalen Bilder verarbeitet werden, um Objekte in einem vorbestimmten Beobachtungsgebiet der Bilder zu lokalisieren, wobei sich der Abstand dieser relativ zu dem Fahrzeug ändert.

3. Verfahren nach Anspruch 1 oder 2, **dadurch gekennzeichnet, dass** die Position und die Geschwindigkeit relativ zu dem Fahrzeug für die lokalisierten Objekte bestimmt wird.

4. Verfahren nach einem der vorstehenden Ansprüche, **dadurch gekennzeichnet, dass** interessante Gebiete (26, 27) in der Serie von zweidimensionalen Bildern (25), in welcher die Bewegung der Objekte verfolgt wird, bestimmt werden.

5. Verfahren nach einem der vorstehenden Ansprüche, **dadurch gekennzeichnet, dass** der Abstand der Objekte relativ zu dem Fahrzeug in den dreidimensionalen Bildern (21) bestimmt wird.

6. Verfahren nach einem der vorstehenden Ansprüche, **dadurch gekennzeichnet, dass** die dreidimensionalen Bilder (21) verarbeitet werden, um Objekte (23) zu detektieren, für welche die Abstandsänderung relativ zu dem Fahrzeug größer ist als ein vorbestimmter Wert.

7. Verfahren nach Anspruch 6, **dadurch gekennzeichnet, dass** die Position und Größeninformation des detektierten Objekts (23), die von den dreidimensionalen Bildern erlangt wurden, an eine zweidimensionale Abbildungseinheit übermittelt werden, wobei die Objekte, die in den 2D-Bildern verfolgt werden, den Informationen angepasst werden, die von den dreidimensionalen Bildern erhalten wurden.

8. Verfahren nach Anspruch 6, **dadurch gekennzeichnet, dass** ein zusätzliches interessantes Gebiet (28), in welchem sich das Objekt befindet, das in den dreidimensionalen Bildern detektiert wurde, in den zweidimensionalen Bildern (25) hinzugefügt wird.

9. Verfahren nach einem der Ansprüche 1-3, **dadurch gekennzeichnet, dass** Objekte (32, 33) in den dreidimensionalen Bildern (31) zusammen mit der Position und Geschwindigkeit des Objekts relativ zu dem Fahrzeug identifiziert und verfolgt werden.

10. Verfahren nach Anspruch 9, **dadurch gekennzeichnet, dass** Objekte (37) in den 2D-Bildern mit ihrer Position identifiziert werden, für welche die Änderung des Abstands relativ zu dem Fahrzeug als größer erachtet wird als eine vorbestimmte Abstandsänderung.

11. Verfahren nach Anspruch 10, **gekennzeichnet durch** die weiteren Schritte:
- Übermitteln der Position des Objekts (37) an eine dreidimensionale Abbildungseinheit,
- Anfordern der Bestimmung der relativen Distanz des Objekts (37), für welches die Position übermittelt wurde, zu dem Fahrzeug,
- Bestimmen der relativen Distanz des Objekts, für welches die Position in den 2D-Bildern bestimmt wurde, und
- Verfolgen des Objekts auch in den dreidimensionalen Bildern.

12. Verfahren nach einem der vorstehenden Ansprüche, **dadurch gekennzeichnet, dass** die 2D-Bilder mit einer Bildrate zwischen 50 und 100 Bildern pro Sekunde aufgenommen werden, wobei die dreidimensionalen Bilder mit einer Bildrate zwischen 10 und 100 Bildern pro Sekunde aufgenommen werden.

13. Verfahren nach einem der vorstehenden Ansprüche, **dadurch gekennzeichnet, dass** Objekte in den Bildern unter Verwendung verschiedener Filter-Algorithmen, die auf die Bilddaten angewandt werden, detektiert werden.

14. Verfahren nach einem der vorstehenden Ansprüche, **dadurch gekennzeichnet, dass** für die zweidimensionalen Bilder eine erste Bildrate für die Bilderfassung der interessanten Gebiete mit den verfolgten Objekten verwendet wird, wobei eine zweite Bildrate für die Bilderfassung der gesamten 2D-Bilder verwendet wird.

15. Verfahren nach Anspruch 14, **dadurch gekennzeichnet, dass** die zweite Bildrate 10 bis 50 Mal geringer ist als die erste Bildrate.

16. Verfahren nach einem der vorstehenden Ansprüche, **dadurch gekennzeichnet, dass**, wenn ein Objekt verfolgt wird, der Positionsvektor in dem aufgenommenen Bild und ein Geschwindigkeitsvektor unter Berücksichtigung einer Serie von Bildern für das verfolgte Objekt bestimmt werden.

17. Verfahren nach einem der vorstehenden Ansprüche, **dadurch gekennzeichnet, dass** ein Alarmsignal erzeugt wird, wenn in einer der Serien von Bildern bestimmt wird, dass sich ein Objekt dem Fahrzeug mit einer vorbestimmten relativen Geschwindigkeit nähert.

18. Verfahren nach Anspruch 17, **dadurch gekennzeichnet, dass** das Alarmsignal an eine Geschwindigkeitsregeleinheit des Fahrzeugs übermittelt wird.

19. Verfahren nach Anspruch 17 oder 18, **dadurch gekennzeichnet, dass** der Fahrer über die Tatsache informiert wird, wenn sich ein Objekt näher an dem Fahrzeug als ein vorbestimmter Abstand befindet.

20. Verfahren nach einem der vorstehenden Ansprüche, **dadurch gekennzeichnet, dass** die Serie von Bildern unter Berücksichtigung der Fahrtrichtung des Fahrzeugs verarbeitet wird.

21. System zum Abbilden einer Fahrzeugumgebung, umfassend:
- einen zweidimensionalen Bildsensor (11), der eine Serie von zweidimensionalen Bildern der Fahrzeugumgebung erzeugt,
- einen dreidimensionalen Bildsensor (12), der eine Serie von dreidimensionalen Bildern der Fahrzeugumgebung erzeugt, die eine Tiefeninformation aufweisen, wobei das System **dadurch gekennzeichnet ist, dass** es des Weiteren umfasst:
- eine Bildverarbeitungseinheit (15), die eine der Serien von 2D- und 3D-Bildern zum Detektieren von mindestens einem Objekt, das in einem interessanten Gebiet in der einen Serie von Bildern verfolgt werden soll, verarbeitet, wobei die Bildverarbeitungseinheit (15) auch die andere der Serien von 2D- und 3D-Bildern verarbeitet, um Objektinformationen in der anderen der Serien von 2D- und 3D-Bildern zu erlangen, wobei die Verarbeitungseinheit die Objekte, die in der einen der Serien von 2D- und 3D-Bildern verfolgt werden sollen, gemäß den Objektinformationen, die von einem Verarbeiten der anderen der Serien von Bildern erhalten wurden, anpasst.

22. System nach Anspruch 21, **dadurch gekennzeichnet, dass** der 2D-Bildsensor (11) ein CMOS- oder CCD-Bildsensor ist, wobei der 3D-Bildsensor (12) ein Photomischdetektorbildsensor ist.

23. System nach Anspruch 21 oder 22, **dadurch gekennzeichnet, dass** es eine 2D-Abbildungseinheit umfasst, die den 2D-Bildsensor (11) und eine 2D-Sensorsteuerungseinheit (13) umfasst.

24. System nach einem der Ansprüche 21-23, **dadurch gekennzeichnet, dass** es eine 3D-Abbildungseinheit umfasst, die den 3D-Bildsensor (12) und eine 3D-Sensorsteuerungseinheit (14) umfasst.

25. Geschwindigkeitsregelsystem für ein Fahrzeug, das eine Geschwindigkeitsregeleinheit umfasst, die den Motor des Fahrzeugs steuert, und ein System nach einem der Ansprüche 21-24 umfasst.

## Revendications

1. Procédé de capture d'images de l'entourage d'un véhicule, le procédé comprenant les étapes suivantes:
- la prise d'une série d'images en 2 dimensions (21, 31) de l'entourage,
- la prise d'une série d'images en 3 dimensions (25, 35) de l'entourage, les images comprenant des informations de profondeur,
- la détermination d'au moins un objet dans une zone d'intérêt dans l'une des séries d'images et le suivi dudit objet dans ladite zone d'intérêt,
- le traitement de l'autre des séries d'images afin de rechercher des informations d'objet parmi ladite autre série d'images,
- l'ajustement des objets à suivre dans ladite des séries d'images selon les informations d'objet reçues à partir du traitement de l'autre des séries d'images.

2. Procédé selon la revendication 1, **caractérisé en ce que** les images en 2 dimensions et les images en 3 dimensions sont traitées afin de localiser des objets dans une zone d'observation prédéterminée des images, dont la distance varie par rapport au véhicule.

3. Procédé selon la revendication 1 ou 2, **caractérisé en ce que** la position et la vitesse par rapport au véhicule sont déterminées pour les objets localisés.

4. Procédé selon l'une quelconque des revendications précédentes, **caractérisé en ce que** des zones d'intérêt (26, 27) sont déterminées dans la série d'images en 2 dimensions (25) dans laquelle le mouvement des objets est suivi.

5. Procédé selon l'une quelconque des revendications précédentes, **caractérisé en ce que** la distance des objets par rapport au véhicule est déterminée sur les images en 3 dimensions (21).

6. Procédé selon l'une quelconque des revendications précédentes, **caractérisé en ce que** les images en 3 dimensions (21) sont traitées afin de détecter des objets (23) pour lesquels le changement de distance par rapport au véhicule est supérieur à une valeur prédéterminée.

7. Procédé selon la revendication 6, **caractérisé en ce que** les informations de position et de taille de l'objet détecté (23) recherchées parmi les images en 3 dimensions sont transmises à une unité de capture d'images en 2 dimensions, les objets suivis sur les images en 2D étant adaptés aux informations reçues à partir des images en 3 dimensions.

8. Procédé selon la revendication 6, **caractérisé en ce qu'**une zone supplémentaire d'intérêt (28) dans laquelle l'objet est détecté sur les images en 3 dimensions est ajoutée aux images en 2 dimensions (25).

9. Procédé selon l'une quelconque des revendications 1 à 3, **caractérisé en ce que** des objets (32, 33) sont identifiés et suivis sur les images en 3 dimensions (31) avec la position et la vitesse de l'objet par rapport au véhicule.

10. Procédé selon la revendication 9, **caractérisé en ce que** des objets (37) sont identifiés sur les images en 2D avec leur position, pour lesquels le changement de distance par rapport au véhicule est considéré comme étant supérieur à un changement de distance prédéterminé.

11. Procédé selon la revendication 10, **caractérisé en ce qu'**il comprend en outre les étapes consistant à:
transmettre la position dudit objet (37) à une unité de capture d'images en 3 dimensions,
- demander la détermination de la distance relative par rapport au véhicule de l'objet (37) pour lequel la position a été transmise,
- déterminer la distance relative dudit objet pour lequel la position a été déterminée sur les images en 2D, et
- suivre ledit objet également sur les images en 3 dimensions.

12. Procédé selon l'une quelconque des revendications précédentes, **caractérisé en ce que** les images en 2D sont prises à une cadence de l'ordre de 50 à 100 vues/s, tandis que les images en 3 dimensions sont prises à une cadence de l'ordre de 10 à 100 vues/s.

13. Procédé selon l'une quelconque des revendications précédentes, **caractérisé en ce que** les objets sur les images sont détectés en utilisant différents algorithmes de filtrage appliqués aux données d'images.

14. Procédé selon l'une quelconque des revendications précédentes, **caractérisé en ce que**, pour les images en 2 dimensions, une première cadence est utilisée pour l'acquisition d'images des zones d'intérêt avec les objets suivis, tandis qu'une seconde cadence est utilisée pour l'acquisition d'images de la totalité des images en 2D.

15. Procédé selon la revendication 14, **caractérisé en ce que** la seconde cadence est 10 à 50 fois inférieure à la première cadence.

16. Procédé selon l'une quelconque des revendications précédentes, **caractérisé en ce que**, lorsqu'un objet est suivi, le vecteur de position sur l'image enregistrée et un vecteur de vitesse considérant une série d'images sont déterminés pour l'objet suivi.

17. Procédé selon l'une quelconque des revendications précédentes, **caractérisé en ce qu'**un signal d'alarme est généré lorsqu'il est déterminé dans l'une des séries d'images qu'un objet s'approche du véhicule à une vitesse relative prédéterminée.

18. Procédé selon la revendication 17, **caractérisé en ce que** le signal d'alarme est transmis à une unité de régulation de vitesse du véhicule.

19. Procédé selon la revendication 17 ou 18, **caractérisé en ce que** le conducteur est informé du fait qu'un objet soit plus proche du véhicule que la distance prédéterminée.

20. Procédé selon l'une quelconque des revendications précédentes, **caractérisé en ce que** la série d'images est traitée en prenant en compte la direction de déplacement du véhicule.

21. Système capturant des images de l'entourage d'un véhicule, comprenant:
- un capteur d'images en 2 dimensions (11) générant une série d'images en 2 dimensions de l'entourage du véhicule,
- un capteur d'images en 3 dimensions (12) générant une série d'images en 3 dimensions de l'entourage du véhicule ayant des informations de profondeur, ledit système étant **caractérisé en ce qu'**il comprend en outre:
- une unité de traitement d'images (15) traitant l'une des séries d'images en 2D et en 3D afin de détecter au moins un objet à suivre dans une zone d'intérêt dans la série d'images, l'unité de traitement d'images (15) traitant également l'autre des séries d'images en 2D et en 3D afin de rechercher des informations d'objet dans l'autre des séries d'images en 2D et en 3D, dans lequel l'unité de traitement ajuste les objets à suivre dans ladite des séries d'images en 2D et en 3D selon les informations d'objet reçues à partir du traitement de l'autre des séries d'images.

22. Système selon la revendication 21, **caractérisé en ce que** le capteur d'images en 2D (11) est un capteur d'images CMOS ou CCD, le capteur d'images en 3D (12) étant un capteur d'images PMD.

23. Système selon la revendication 21 ou 22, **caractérisé en ce qu'**il comprend une unité de capture d'images en 2D comprenant le capteur d'images en 2D (11) et comprenant une unité de commande de capteur 2D (13).

24. Système selon l'une quelconque des revendications 21 à 23, **caractérisé en ce qu'**il comprend une unité de capture d'images en 3D comprenant le capteur d'images en 3D (12) et comprenant une unité de commande de capteur 3D (14).

25. Système de régulation de vitesse destiné à un véhicule comprenant une unité de régulation de vitesse contrôlant le moteur du véhicule et comprenant un système selon l'une quelconque des revendications 21 à 24.
